(19)

Europäisches Patentamt

European Patent Office

Office européen des brevets

(11) **EP 4 407 082 A2**

(12) **EUROPEAN PATENT APPLICATION**

(43) Date of publication:
**31.07.2024 Bulletin 2024/31**

(21) Application number: **24164175.2**

(22) Date of filing: **08.09.2018**

(51) International Patent Classification (IPC):
***D01D 10/02*** *(2006.01)*

(52) Cooperative Patent Classification (CPC):
**A24D 3/10; A24D 3/0204; B65B 27/12;
D01D 10/02; D01F 2/28; D01F 2/30**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.09.2017  US 201762555995 P**

(62) Document number(s) of the earlier application(s) in
accordance with Art. 76 EPC:
**18779772.5 / 3 679 182**

(71) Applicant: **Acetate International LLC
Irving, TX 75039 (US)**

(72) Inventor: **CAENEN, Philip
3620 Lanaken (BE)**

(74) Representative: **Simmons & Simmons LLP
(Munich)
Lehel Carré
Thierschplatz 6
80538 Munich (DE)**

Remarks:
•This application was filed on 18-03-2024 as a
divisional application to the application mentioned
under INID code 62.
•Claims filed after the date of filing of the application
/ after the date of receipt of the divisional application
(Rule 68(4) EPC)

(54) **HIGH DPF CELLULOSE ACETATE TOW AND PROCESS FOR MAKING**

(57)     Disclosed are cellulose acetate cellulose acetate tow and processes for making cellulose acetate tow having at least 15 denier per filament, e.g., at least 20 denier per filament, or at least 25 denier per filament. The cellulose acetate tows may have total denier of more than 20,500.

EP 4 407 082 A2

**Description**

PRIORITY CLAIM

This application claims priority to U.S. Provisional Application No. 62/555,995 filed on September 8, 2017, the entirety of which is incorporated herein by reference.

FIELD OF THE INVENTION

The present invention relates generally to cellulose acetate with a high denier per filament ("dpf") and processes for making cellulose acetate with a high dpf. In particular, the present invention relates to cellulose acetate tow and processes for making cellulose acetate tow having at least 15 denier per filament, e.g., at least 20 denier per filament, or at least 25 denier per filament.

BACKGROUND OF THE INVENTION

Cellulose esters such as cellulose acetate are known for their robust uses, especially as filaments and fibers. Indeed, cellulose acetate is one of the principle types of synthetic fibers. As interest in the materials increases, diverse and varied cellulose ester filament and fiber properties are desired. As such, one property useful for cellulose ester filaments to achieve is a high denier per filament ("dpf"), such as cellulose acetate comprising at least 15 dpf or at least 20 dpf or at least 25 dpf. Articles made from filaments with a high dpf count tend to be thick, sturdy, and durable.
Such high dpf cellulose acetate filaments have previously not been achieved. Typical cellulose acetate dpf values are much lower. For example, the Global Acetate Manufacturers Association ("GAMA") explains that DPF (denier per filament) "is the thickness of a filament defined by the weight in gram of 9,000 meters of uncrimped fiber." The GAMA reports that cellulose acetate is available as filter tow "in a variety of DPF ranging from 1.5 to 9.0s, and DPF from 2.7 to 3.0 is commonly manufactured." (acetateweb.com/filter-tow, accessed Sept. 8, 2017). Currently, the desired draw resistance for cellulose acetate filters is achieved by forming filters from tow bands having low denier per filament, i.e., filaments with a small cross-sectional area. Traditionally, the small cross-sectional area is believed to provide high surface area, which translates to higher filtering efficacy. The present invention, however, takes a contrary approach to conventional wisdom in the art, creating high dpf and high cross-sectional area filaments which can be used for filtering.
Although such high dpf cellulose acetate filaments have previously not been achieved, various approaches have been taken to vary the denier per filament and total denier. For example, US Patent No. 8,967,155 discloses a method for forming a filter rod that may include providing a bale of crimped tow band having about 10 denier per filament or greater and about 20,000 total denier or less, the crimped tow band comprising a plurality of cellulose acetate filaments; and placing the crimped tow band in an apparatus so as to form a filter rod for cigarette articles. The ' 155 patent explains that low denier per filament, high total denier tow bands were previously used, based on the understanding that using a greater number of filaments having a smaller cross-sectional area would provide high surface area, which translates to higher filtering efficacy. To address the slim and ultra-slim circumference cigarette market, which uses a smaller diameter for the cigarette and for the filter, the ' 155 patent used the opposite approach, greater denier per filament with lesser total denier. However, the dpf ranges and total denier discussed in the '155 patent are not sufficient for all potential uses of cellulose acetate filaments and fibers.
The need exists for cellulose acetate tow having greater denier per filament and processes for making this cellulose acetate.

SUMMARY OF THE INVENTION

In some aspects, the present invention is directed to a cellulose acetate tow having at least 15 denier per filament and more than 20,500 total denier, for example a tow having from 20 to 50 denier per filament or 20 to 40 denier per filament. In some embodiments, the invention is directed to a tow bale comprising cellulose acetate tow, wherein the tow has at least 20 denier per filament and more than 20,500 total denier. And in some embodiments, the invention is directed to a filter comprising cellulose acetate tow, the tow having at least 20 denier per filament and more than 20,500 total denier. In some embodiments the invention is directed to process for producing a cellulose acetate tow bale, comprising dissolving cellulose acetate in a solvent to form a cellulose acetate dope; spinning the cellulose acetate dope through at least one spinneret with at least one hold diameter from 100 to 300 microns to form filaments having a denier per filament of at least 15, and a total denier of more than 20,500; bundling the filaments to form a tow; plasticizing and crimping the tow; drying the tow; and packaging the tow into a bale. Some embodiments are directed to cellulose acetate tow having an encapsulated pressure drop ("EPD") in mm water/per mm length of 0.9 or less.

BRIEF DESCRIPTION OF THE DRAWINGS

The present invention will be better understood in view of the appended non-limiting figure, in which:

FIG. 1 shows an example of a spinneret design to produce filaments in accordance with an embodiment of the present invention.
FIG. 2 shows an example of a spinneret design to produce filaments in accordance with an embodiment of the present invention.
FIG. 3 shows the EPD versus the tow weight for high dpf samples compared to a reference sample.

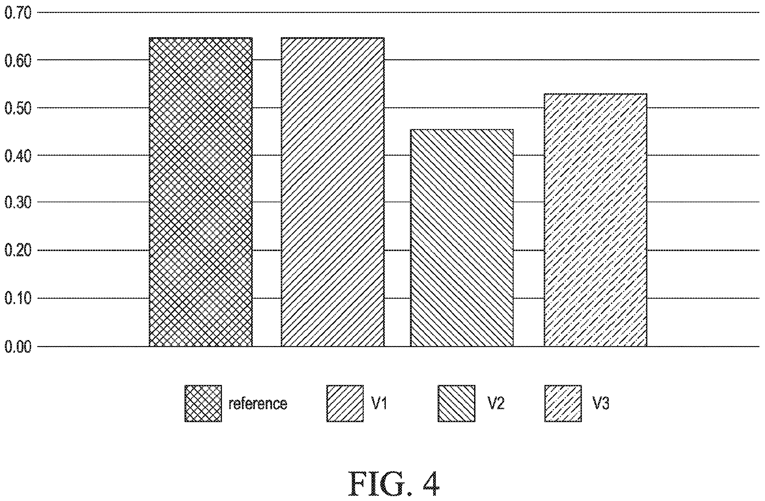

FIG. 4 shows the hardness for high dpf samples compared to a reference sample.

DETAILED DESCRIPTION OF THE INVENTION

I. <u>Introduction</u>

The present disclosure is directed to cellulose acetate tow comprising at least 20 denier per filament or at least 25 denier per filament and methods for making this cellulose acetate tow. In some aspects, the cellulose acetate tow has a total denier of greater than 20,000. The present disclosure is further directed to a filter rod comprising cellulose acetate tow having at least 20 denier per filament. The present disclosure is also directed to methods of preparing cellulose acetate tow having at least 20 denier per filament and 20,000 to 60,000 total denier and/or forming a filter from such cellulose acetate tow.

Advantageously, articles made from filaments with a high dpf count tend to be thick, sturdy, and durable. Also, by using a cellulose acetate tow having at least 20 denier per filament in a filter, the pressure drop values of the filter are decreased, leading to improvements in draw while maintaining the desired hardness of the filter. While conventional cellulose acetate filters typically use cellulose acetate tow having from 2 to 8 denier per filament, it has surprisingly and unexpectedly been found that cellulose acetate tows having at least 20 denier per filament may be used in the filter. When used in the filter, the cellulose acetate tow having at least 20 denier per filament is able to achieve a very low encapsulated pressure drop, for example less than about 0.5 mm/mm length, which improves the draw characteristics.

II. <u>Cellulose Acetate</u>

As described herein, the present disclosure relates to a cellulose acetate tow having at least 15 denier per filament, e.g., at least 17 dpf, at least 18 dpf, at least 20 dpf, at least 23 dpf, at least 25 dpf, at least 27 dpf, at least 30 dpf, at least 32 dpf, or at least 35 dpf. In terms of ranges, filaments for use in the present invention may range from 15 to 50 dpf, e.g., from 20 to 50 dpf, from 20 to 40 dpf, from 20 to 35 dpf, from 23 to 33 dpf, or from 25 to 30 dpf. Cellulose acetate, as used herein, refers to cellulose diacetate. In some aspects, the cellulose acetate has a degree of substitution from 2 to 2.6.

Cellulose acetate may be prepared by known processes, including those disclosed in U.S. Patent No. 2,740,775 and in U.S. Publication No. 2013/0096297, the entireties of which are incorporated herein by reference. Typically, acetylated cellulose is prepared by reacting cellulose with an acetylating agent in the presence of a suitable acidic catalyst and then de-esterifying.

The cellulose may be sourced from a variety of materials, including cotton linters, a soft wood or from a hardwood. Softwood is a generic term typically used in reference to wood from conifers (i.e., needle-bearing trees from the order Pinales). Softwood-producing trees include pine, spruce, cedar, fir, larch, douglas-fir, hemlock, cypress, redwood and yew. Conversely, the term hardwood is typically used in reference to wood from broad-leaved or angiosperm trees. The terms "softwood" and "hardwood" do not necessarily describe the actual hardness of the wood. While, on average, hardwood is of higher density and hardness than softwood, there is considerable variation in actual wood hardness in both groups, and some softwood trees can actually produce wood that is harder than wood from hardwood trees. One feature separating hardwoods from softwoods is the presence of pores, or vessels, in hardwood trees, which are absent in softwood trees. On a microscopic level, softwood contains two types of cells, longitudinal wood fibers (or tracheids) and transverse ray cells. In softwood, water transport within the tree is via the tracheids rather than the pores of hardwoods. In some aspects, a hardwood cellulose is preferred for acetylating.

Acylating agents can include both carboxylic acid anhydrides (or simply anhydrides) and carboxylic acid halides, particularly carboxylic acid chlorides (or simply acid chlorides). Suitable acid chlorides can include, for example, acetyl chloride, propionyl chloride, butyryl chloride, benzoyl chloride and like acid chlorides. Suitable anhydrides can include, for example, acetic anhydride, propionic anhydride, butyric anhydride, benzoic anhydride and like anhydrides. Mixtures of these anhydrides or other acylating agents can also be used in order to introduce differing acyl groups to the cellulose. Mixed anhydrides such as, for example, acetic propionic anhydride, acetic butyric anhydride and the like can also be used for this purpose in some embodiments.

In most cases, the cellulose is exhaustively acetylated with the acetylating agent to produce a derivatized cellulose having a high degree of substitution (DS) value, such as from 2.5 to 3, along with some additional hydroxyl group substitution (e.g., sulfate esters) in some cases. Exhaustively acetylating the cellulose refers to an acetylation reaction that is driven toward completion such that as many hydroxyl groups as possible in cellulose undergo an acetylation reaction.

Suitable acidic catalysts for promoting the acetylation of cellulose often contain sulfuric acid or a mixture of sulfuric acid and at least one other acid. Other acidic catalysts not containing sulfuric acid can similarly be used to promote the acetylation reaction. In the case of sulfuric acid, at least some of the hydroxyl groups in the cellulose can become initially functionalized as sulfate esters during the acetylation reaction. Once exhaustively acetylated, the cellulose is then subjected to a controlled partial de-esterification step, generally in the presence of a de-esterification agent, also referred to as a controlled partial hydrolysis step.

De-esterification, as used herein, refers to a chemical reaction during which one or more of the ester groups of the intermediate cellulosic ester are cleaved from the cellulose acetate and replaced with a hydroxyl group, resulting in a cellulose acetate product having a (second) DS of less than 3. "De-esterifying agent," as used herein, refers to a chemical agent capable of reacting with one or more of the ester groups of the cellulose acetate to form hydroxyl groups on the intermediate cellulosic ester. Suitable de-esterifying agents include low molecular weight alcohols, such as methanol, ethanol, isopropyl alcohol, pentanol, R-OH, wherein R is $C_1$ to $C_{20}$ alkyl group, and mixtures thereof. Water and a mixture of water and methanol may also be used as the de-esterifying agent. Typically, most of these sulfate esters are cleaved during the controlled partial hydrolysis used to reduce the amount of acetyl substitution. The reduced degree of substitution may range from 0.5 to 2.9, e.g., from 1.5 to 2.9 or from 2 to 2.6. The degree of substitution may be selected based on the at least one organic solvent to be used in the binder composition. For example, when acetone is used as the organic solvent, the degree of substitution may range from 2.2 to 2.65.

The number average molecular weight of the cellulose acetate may range from 30,000 amu to 100,000 amu, e.g., from 50,000 amu to 80,000 amu and may have a polydispersity from 1.5 to 2.5, e.g., from 1.75 to 2.25 or from 1.8 to 2.2. All molecular weight recited herein, unless otherwise specified, are number average molecular weights. The molecular weight may be selected based on the desired hardness of the final tow or filter rod. Although greater molecular weight leads to increased hardness, greater molecular weight also increases viscosity. The cellulose acetate may be provided in powder or flake form.

In some aspects, blends of different molecular weight cellulose acetate flake or powder may be used. Accordingly, a blend of high molecular weight cellulose acetate, e.g., a cellulose acetate having a molecular weight above 60,000 amu, may be blended with a low molecular weight cellulose acetate, e.g., a cellulose acetate having a molecular weight below 60,000 amu. The ratio of high molecular weight cellulose acetate to low molecular weight cellulose acetate may vary but may generally range from 1:10 to 10:1; e.g., from 1:5 to 5:1 or from 1:3 to 3:1.

## III. Cellulose Acetate Filaments, Tow, Tow Bales, and Methods of Producing

To form filaments from cellulose ester, a dope is formed by dissolving the cellulose ester dissolved in a solvent to form a dope solution. The solvent may be selected from the group consisting of water, acetone, methylethyl ketone, methylene chloride, dioxane, dimethyl formamide, methanol, ethanol, glacial acetic acid, supercritical carbon dioxide, any suitable solvent capable of dissolving the aforementioned polymers, and combinations thereof. In some aspects, the solvent is acetone or a combination of acetone and up to 5 wt.% water. Pigments may also be added to the dope. The dope may comprise, for example, from 20 to 40 wt.% cellulose acetate and from 60 to 90 wt.% solvent. Pigments, when added, may be present from 0.1 to 5 wt.%. The dope is then filtered and deaerated prior to being spun to form filaments. The dope may be spun in a spinner comprising one or more cabinets, each cabinet comprising a spinneret. The spinneret comprises holes that affect the rate at which the solvent evaporates from the filaments.

Generally, the production of a bale of tow bands may involve spinning filaments from the dope, forming a tow band from the filaments, crimping the tow band, and baling the crimped tow band. Within said production, optional steps may include, but not be limited to, warming the filaments after spinning, applying a finish or additive to the filaments and/or tow band prior to crimping, and conditioning the crimped tow band. The parameters of at least these steps are important for producing desirable bales. It should be noted that bales may vary in size and shape as needed for further processing.

Filaments

Filaments for use in the present invention are high denier per filament (dpf) filaments, i.e., 15 dpf or greater or 20 dpf or greater. In some embodiments, filaments for use in the present invention may be 25 dpf or greater. In some embodiments, filaments for use in the present invention may range from 20 to 50 dpf, e.g., from 20 to 35 dpf, or from 25 to 30 dpf.

The filaments for use in the present invention may have any suitable cross-sectional shape, including, but not limited to, circular, substantially circular, crenulated, ovular, substantially ovular, polygonal, substantially polygonal, dog-bone, "Y," "X," "K," "C," multi-lobe, and any hybrid thereof. As used herein, the term "multi-lobe" refers to a cross-sectional shape having a point (not necessarily in the center of the cross-section) from which at least two lobes extend (not necessarily evenly spaced or evenly sized).

Filaments for use in the present invention may be produced by any method known to one skilled in the art. As noted, in some embodiments, filaments may be produced by spinning a dope through a spinneret. As used herein, the term "dope" refers to a cellulose acetate solution and/or suspension from which filaments are produced. In some embodiments, a dope may comprise cellulose acetate and solvents. In some embodiments, a dope for use in conjunction with the present invention may comprise cellulose acetate, solvents, and additives. In some embodiments, the cellulose acetate may be at a concentration in the dope ranging from 20 to 40 wt. percent (e.g., from 20 to 30 wt.%, from 25 to 40 wt.%, from 25 to 30 wt.%), and the solvent may be at a concentration from 60 to 90 wt.% (e.g., 60 to 80 wt.%, 70 to 80 wt.%, 80 to 90 wt.%). In some embodiments, the dope may be heated to a temperature ranging from 40°C to 100°C.

Suitable solvents may include, but not be limited to, water, acetone, methylethyl ketone, methylene chloride, dioxane, dimethyl formamide, methanol, ethanol, glacial acetic acid, supercritical $CO_2$, any suitable solvent capable of dissolving the aforementioned polymers, or any combination thereof. By way of nonlimiting example, a solvent for cellulose acetate may be an acetone/methanol mixture. In some embodiments, to produce very high dpf values of the present invention, increased solvent levels compared with amounts for typical dpf values (i.e., 2 to 8 dpf) may be used. For example in some embodiments, to produce very high dpf tow, solvent amounts may be from 5 to 30 wt. % greater when compared with solvent amounts for typical dpf tow. Additional solvent amounts can, in some cases, present challenges to the processing of the filaments.

The spinneret design and/or spinning parameters may affect the rate at which the solvent evaporates from the filament, which may affect the size, cross-sectional shape, strength, and processability of the filaments. In some embodiments, a spinneret may comprise a plurality of holes spaced at least 0.070 inches apart. In some embodiments, to achieve the very high dpf values of the present invention, spinneret holes of diameter size from 100 to 300 micron are used, e.g., 125 to 250 micron, or 150 to 225 micron.

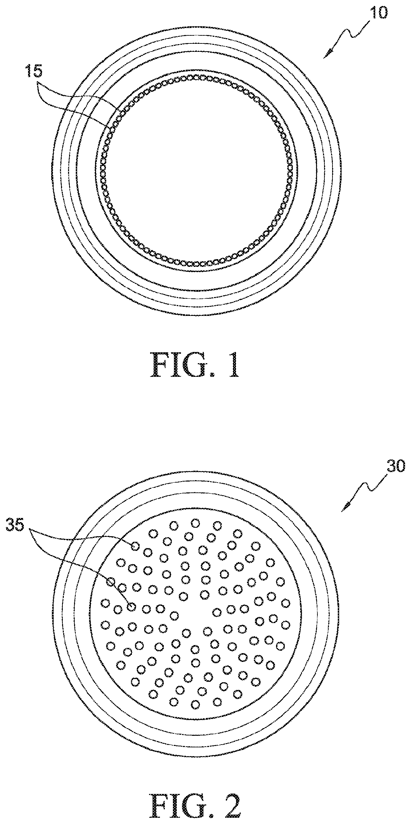

In some embodiments, spinnerets for use in conjunction with the present invention may comprise a plurality of extrusion holes in a donut configuration. FIG. 1 shows one example. The spinneret (10) contains extrusion holes or jet holes (15) are oriented around the perimeter of the top face of the spinneret. As used herein, "donut configuration" refers to any shape (circular, ovular, polygonal, triangular and the like) having a void in the middle, wherein the void does not have holes for extrusion. FIG. 2 shows another example of a configuration in accordance with one embodiment of the present invention. The spinneret (30) contains extrusion or jet holes (35) oriented spaced apart all around the top face of the spinneret. As used herein, the terms "holes" and "extrusion holes," when used in conjunction with a spinneret design, may be used interchangeably referring generally to openings through which the dope is extruded. In some embodiments, extrusion holes may be tapered, e.g., countersinks, with capillary exits. Tapering may be at a constant angle or at a more than one angle. In some embodiments, extrusion holes within a single spinneret may have different tapering angles. In some embodiments, the extrusion holes and/or capillary exits may have a cross-sectional shape that produces a desired filament cross-sectional shape. Examples of extrusion hole and/or capillary exit cross-sectional shapes may include, but not be limited to, circular, substantially circular, ovular, substantially ovular, crescent, multi-lobal, polygonal (e.g., like tripods, tetrapods, stars, triangles, squares, trapezoids, pentagons, hexagons, and so on with sides of even lengths or varying lengths), polygonal with rounded corners, and any hybrid thereof. In some embodiments, a spinneret may comprise at least two different cross-sectional shaped extrusion holes and/or capillary exits. In some embodiments, a spinneret may comprise at least two different size extrusion holes and/or capillary exits. In some embodiments, the size and/or cross-sectional shape of an extrusion hole may vary from that of the corresponding capillary exit.

FIGS. 1 and 2 show two examples (although there are more) of a spinneret design to produce filaments in accordance with an embodiment of the present invention.

In some embodiments, as the filaments exit the spinneret, they are fed onto a constant speed roll, where they may then be further stretched. In some embodiments, the spinning parameters may include extruding filaments at a drawdown ratio (fiber exit speed to take-up speed) ranging from 0.5 to 2.0, e.g., from 0.7 to 1.6. It should be understood by one skilled in the art that extruding does not imply a single method or action for producing the filaments and could be interchanged with, at least, spinning, expelling, and the like. The increased thickness of the high dpf filaments requires adjustment of the spinning conditions to adequately dry the fibers compared with spinning conditions for conventional dpf filaments. Surprisingly, however, the inventors have discovered that, in some embodiments, the high dpf cellulose acetate filaments can be achieved without replacing the conventional equipment used to produce cellulose acetate tow with lower dpf.

The thickness of the high dpf filaments poses the problem of additional retained solvent compared with conventional filaments with lower dpf. However, the inventors surprisingly discovered that high dpf filaments can still be produced and processed by careful removal of the solvent. Some embodiments of the present invention may involve heating the filaments to a temperature at or above the evaporation temperature of the solvent to assist in removal of the solvent. Heating may be in the form of direct heat, indirect heat, or any combination thereof. Further, heating may involve heaters, heated enclosures (e.g., cabinets or tunnels), heated surfaces (e.g., hot shoes), microwaves, irradiation sources that cause additives in the filaments (e.g., nanoparticles) to produce heat, or any combination thereof. For example, the spinneret may be in a cabinet operated at a temperature up to 100°C and the heat may be supplied by a hot air stream to evaporate the solvent. The flow of air through the spinner may be co-current or counter-current. In some embodiments, more than 90% of the solvent is evaporated during the spinning to leave solid filaments of cellulose acetate. To achieve very high dpf values, in some embodiments, the residence time for evaporation is increased, for example, by lowering the run speed, while the drying or temperature profile is adjusted relative to the profile for low or average dpf filaments. For example, in some embodiments, the residence time for the evaporation step is increased by more than 5%, e.g., more than 10%, more than 15%, more than 20%, more than 25%, more than 40%, more than 50%, more than 75%, when compared with the residence time for a similar cellulose acetate tow bale made from filaments having a dpf from 2 to 8. In some embodiments, the pressure for evaporation is also adjusted relative to that for low dpf filaments. For example, in some embodiments, the pressure during evaporation is maintained at 60 - 200 psi, e.g., 120 - 180 psi. In addition, in some embodiments, the size of the evaporation equipment (heaters, enclosures, etc.) is increased relative to the sizes used for a low or average dpf filaments.

Some embodiments of the present invention may involve treating filaments to achieve surface functionality on the filaments. In some embodiments, filaments may comprise a surface functionality including, but not limited to, biodegradability sites (e.g., defect sites to increase surface area to enhance biodegradability), chemical handles (e.g., carboxylic acid groups for subsequent functionalization), active particle binding sites (e.g., sulfide sites binding gold particles or chelating groups for binding iron oxide particles), sulfur moieties, or any combination thereof. One skilled in the art should understand the plurality of methods and mechanisms to achieve surface functionalities. Some embodiments may involve dipping, spraying, ionizing, functionalizing, acidizing, hydrolyzing, exposing to a plasma, exposing to an ionized gas, or any combination thereof to achieve surface functionalities. Suitable chemicals to impart a surface functionality may be any chemical or collection of chemicals capable of reacting with cellulose acetate including, but not limited to, acids (e.g., sulfuric acid, nitric acid, acetic acid, hydrofluoric acid, hydrochloric acid, and the like), reducing agents (e.g., $LiAlH_4$, $NaBH_4$, $H_2/Pt$, and the like), Grignard reagents (e.g., $CH_3MgBr$, and the like), trans-esterification reagent, amines (e.g., $R-NH_3$ like $CH_3NH_3$), or any combination thereof. Exposure to plasmas and/or ionized gases may react with the surface, produce defects in the surface, or any combination thereof. Said defects may increase the surface area of the filaments which may yield higher loading and/or higher filtration efficacy in the final filter products.

Some embodiments of the present invention may involve applying a finish to the filaments. Suitable finishes may include, but not be limited to, at least one of the following: oils (e.g., mineral oils or liquid petroleum derivatives), water, additives, or any combination thereof. Examples of suitable mineral oils may include, but not be limited to, water white (i.e., clear) mineral oil having a viscosity of 80-95 SUS (Sabolt Universal Seconds) measured at 38°C (100° F.). Examples of suitable emulsifiers may include, but not be limited to, sorbitan monolaurate, e.g., SPAN® 20 (available from Uniqema, Wilmington, Del.), polyethylene oxide) sorbitan monolaurate, e.g., TWEEN® 20 (available from Uniqema, Wilmington, Del.). The water may be de-mineralized water, de-ionized water, or otherwise appropriately filtered and treated water. The lubricant or finish may be applied by spraying or wiping. Generally, the lubricant or finish is added to the filament prior to forming the filaments into tow.

In some embodiments of the present invention, finish may be applied as a neat finish or as a finish emulsion in water. As used herein, the term "neat finish" refers to a finish formulation without the addition of excess water. It should be noted that finish formulations may comprise water. In some embodiments, finish may be applied neat followed by applying water separately.

In some embodiments of the present invention, a finished emulsion may comprise less than 98% water, less than 95%, less than 92%, or less than 85%. In some embodiments, it may be advantageous in later steps to have filaments having a lower weight percentage of moisture (e.g., 5% to 25% w/w of the tow band), of which water is a contributor. The water content of the finished emulsion may be at least one parameter that may assist in achieving said weight percentage of moisture in the filaments. Therefore, in some embodiments, a finished emulsion may comprise less than 92% water, less than 85% water, or less than 75% water.

Tow

Some embodiments of the present invention may include forming tow bands from a plurality of filaments. In some embodiments, a tow band may be 20,000 total denier or greater, e.g., greater than 21,000 or greater than 22,000. In terms of ranges, the total denier may range from 20,000 to 60,000 e.g., from 22,500 to 60,000, from 20,000 to 40,000, from 20,000 to 30,000 or from 22,500 to 40,000 total denier. In some embodiments, the tow can have a breaking strength between 3.5 kg and 25 kg.

In some embodiments of the present invention, a tow band may comprise more than one type of filament. In some embodiments, the more than one type of filament may vary based on dpf, cross-sectional shape, composition, treatment prior to forming the tow band, or any combination thereof. Examples of suitable additional filaments may include, but are not limited to, carbon filaments, activated carbon filaments, natural fibers, synthetic filaments, or any combination thereof.

Some embodiments of the present invention may include crimping the tow band to form a crimped tow band. Crimping the tow band may involve using any suitable crimping technique known to those skilled in the art. These techniques may include a variety of apparatuses including, but not limited to, a stuffer box or a gear. Nonlimiting examples of crimping apparatuses and the mechanisms by which they work can be found in U.S. Pat. Nos. 7,610,852 and 7,585,441, the entire contents and disclosures of which are incorporated herein by reference. Suitable stuffer box crimpers may have smooth crimper nip rolls, threaded or grooved crimper nip rolls, textured crimper nip rolls, upper flaps, lower flaps, or any combination thereof.

The configuration of the crimp may play a role in the processability of the final bale. Examples of crimp configurations may include, but not be limited to, lateral, vertical, some degree between lateral and vertical, random, or any combination thereof. As used herein, the term "lateral" when describing crimp orientation refers to crimp or fiber bends in the plane of the tow band. As used herein, the term "vertical" when describing a crimp orientation refers to crimp projecting outside of the plane of the tow band and perpendicular to the plane of the tow band. It should be noted that the terms lateral and vertical refer to general overall crimp orientation and may have deviation from said configuration by +/- 30 degrees.

In some embodiments of the present invention, a crimped tow band may comprise filaments with a first crimp configuration and filaments with a second crimp configuration.

In some embodiments of the present invention, a crimped tow band may comprise filaments with at least a vertical crimp configuration near the edges and filaments with at least a lateral crimp configuration near the center. In some embodiments, a crimped tow band may comprise filaments with a vertical crimp configuration near the edges and filaments with a lateral crimp configuration near the center.

The configuration of the crimp may be important for the processability of the final bale in subsequent processing steps, e.g., a lateral crimp configuration may provide better cohesion of filaments than a vertical crimp configuration unless further steps are taken to enhance cohesion. To achieve a lateral crimp, at least one of three processing parameters may be manipulated, e.g., the water content of the tow band prior to crimping, the thickness of the tow band during crimping, and the nip to flap force ratio during crimping.

To achieve a lateral crimp configuration, it may be desirable to perform crimping on a tow band comprising filaments having a lower weight percentage of total moisture. As used herein the term "moisture" refers to the acetone and water components. In some embodiments, the weight percent of moisture in a tow band to achieve lateral crimping may range from a lower limit of 2 %, 3 %, 5%, 7%, 10%, or 15% to an upper limit of 25%, 22%, 20%, or 17% w/w of the tow band, and wherein the weight percent of moisture may range from any lower limit to any upper limit and encompass any subset therebetween. In some embodiments a lower weight percentage of moisture may be achieved by drying the tow band prior to crimping (e.g., actively with a heat source and/or passively by allowing the filaments to dry in ambient conditions), applying a higher solids concentration or finish emulsion with less water content, applying a neat finish followed by separate control water addition, reducing or eliminating any other moisture contributing tow band additions, altering the spinning conditions so as to reduce the moisture content of the fiber leaving the spinning cell (higher temp, slower speed, higher air flow in heating cabinet, change concentration of dope), or any combination thereof.

A lateral crimp configuration may be achieved by crimping with a reduced nip to flap force ratio, i.e., the ratio of applied nip force to applied flap force. As used herein, nip force refers to the force pushing the two nip rolls together applied in a normal direction (i.e., perpendicular to the nip roll axis and directly in line with the two rolls). As used herein, flap force refers to the force applied normal to the flapper at a distance of 1.25 inches from the centerline of the flapper pivot. In some embodiments, the nip to flap force ratio may be 100:1 or less, 50:1 or less, or 25:1 or less. Suitable nip to flap force ratios may range from a lower limit of 3:1, 5:1, or 10:1 to an upper limit of 100:1, 50:1, or 25:1, and wherein the nip to flap ratio may range from any lower limit to any upper limit and encompass any subset therebetween. One skilled in the art, with the benefit of this disclosure, should understand that changing the point at which force is applied normal to the flapper will change the nip to flap ratio. Further, one skilled in the art should understand the equivalent nip to flap ratios when the point at which force is applied normal to the flapper is changed. The ranges given above extend to said equivalent nip to flap ratios.

In some embodiments of the present invention, the filaments may be adhered to each other to provide better processability of the final bale. While adhesion additives may be used in conjunction with any crimp configuration, it may be advantageous to use adhesion additives with a vertical crimp configuration. In some embodiments, adhering may involve adhesion additives on and/or in the filaments. Examples of such adhesion additives may include, but not be limited to, binders, adhesives, resins, tackifiers, or any combination thereof. It should be noted that any additive described herein, or otherwise, capable of adhering two filaments together may be used, which may include, but not be limited to, active particles, active compounds, ionic resins, zeolites, nanoparticles, ceramic particles, softening agents, plasticizers, pigments, dyes, flavorants, aromas, controlled release vesicles, surface modification agents, lubricating agents, emulsifiers, vitamins, peroxides, biocides, antifungals, antimicrobials, antistatic agents, flame retardants, antifoaming agents, degradation agents, conductivity modifying agents, stabilizing agents, or any combination thereof. Some embodiments of the present invention may involve adding adhesive additives to the filaments (in, on, or both) by incorporating the adhesive additives into the dope, incorporating the adhesive additives into the finish, applying the adhesive additives to the filaments (before, after, and/or during forming the tow band), applying the adhesive additives to the tow band (before, after, and/or during crimping), or any combination thereof.

Adhesive additives may be included in and/or on the filaments at a concentration sufficient to adhere the filaments together at a plurality of contact points to provide better processability of the final bale. The concentration of adhesive additives to use may depend on the type of adhesive additive and the strength of adhesion the adhesive additive provides. In some embodiments, the concentration of adhesive additive may range from a lower limit of 0.01%, 0.05%, 0.1%, or 0.25% to an upper limit of 5%, 2.5%, 1%, or 0.5% by weight of the tow band in the final bale. It should be noted that for additives that are used for more than adhesion, the concentration in the tow band in the final bale may be higher, e.g., 25% or less.

Further, some embodiments of the present invention may involve heating the filaments before, after, and/or during crimping. While said heating may be used in conjunction with any crimp configuration, it may be advantageous to use said heating with a vertical crimp configuration. Said heating may involve exposing the filaments of the tow band to steam, aerosolized compounds (e.g., plasticizers), liquids, heated fluids, direct heat sources, indirect heat sources, irradiation sources that causes additives in the filaments (e.g., nanoparticles) to produce heat, or any combination thereof.

Some embodiments of the present invention may include conditioning the crimped tow band. Conditioning may be used to achieve a crimped tow band having a residual acetone content of 0.5% or less w/w of the crimped tow band. Conditioning may be used to achieve a crimped tow band having a residual water content of 8% or less w/w of the crimped tow band. Conditioning may involve exposing the filaments of the crimped tow band to steam, aerosolized compounds (e.g., plasticizers), liquids, heated fluids, direct heat sources, indirect heat sources, irradiation sources that causes additives in the filaments (e.g., nanoparticles) to produce heat, or any combination thereof.

UCE is the amount of work required to uncrimp a fiber. UCE, as reported hereinafter, is sampled prior to baling, i.e., post-drying and pre-baling. UCE, as used herein, is measured as follows: using a warmed up (20 minutes before conventional calibration) Instron tensile tester (Model 1130, crosshead gears-Gear #'s R1940-1 and R940-2, Instron Series IX-Version 6 data acquisition & analysis software, Instron 50 Kg maximum capacity load cell, Instron top roller assembly, 1"$\times$4"$\times$⅛" thick high grade Buna-N 70 Shore A durometer rubber grip faces), a preconditioned tow sample (preconditioned for 24 hours at 22° C $\pm$2° C and Relative humidity at 60%$\pm$2%) of about 76 cm in length is looped over and spread evenly across the center of the top roller, pre-tensioned by gently pulling to 100 g$\pm$2 g (per readout display), and each end of the sample is clamped (at the highest available pressure, but not exceeding the manufacturers recommendations) in the lower grips to effect a 50 cm gauge length (gauge length measured from top of the robber grips), and then tested, until break, at a crosshead speed of 30 cm/minute. This test is repeated until three acceptable tests are obtained and the average of the three data points from these tests is reported. Energy (E) limits are between 0.220 kg and 10.0 kg. Displacement (D) has a preset point of 10.0 kg. UCE is calculated by the formula: UCE ($gcm/cm$)=($E$*1000)/(($D$*2)+500). Breaking strength can be calculated using the same test and the following equation BS = L (where L is the load at max load (kg)). In certain embodiments of the invention, UCE values (in gcm/cm) can range from 190 to 400, e.g., 200 to 300, e.g., 290. In certain embodiments of the invention breaking strength can range from between 3.5 kg and 25 kg, e.g. 4 kg to 20 kg, 4.5 kg to 15 kg, or 5 kg to 12 kg.

Tow Bales

Some embodiments of the present invention may include baling the crimped tow band to produce a bale. In some embodiments, baling may involve placing, e.g., laying, depositing, or arranging, the crimped tow band in a can in a pattern. It should be noted that can is used generically to refer to a container that may be in any shape, preferably square or rectangle, and of any material. As used herein, the term "pattern" refers to any design which may or may not change during placing. In some embodiments of the present invention, the pattern may be substantially zig-zag having a periodicity of 0.5 cycles/ft to 6 cycles/ft. In some embodiments, placing may involve puddling the crimped tow band with a puddling index of 10 m/m to 40 m/m. As used herein, the term "puddling" refers to allowing the tow band to lay at least partially on itself so as to place a greater actual length of tow band than linear distance on which it is placed. As used herein, the term "puddling index" refers to the length of tow band per linear distance on which it is placed.

In some embodiments of the present invention, baling may involve compressing the crimped tow band that has been placed in a suitable container. In some embodiments, baling may involve packaging the compressed crimped tow band. In some embodiments, the packaging may include at least one component like wrapping materials, vacuum ports (for releasing and/or pulling vacuum), securing elements, or any combination thereof. Suitable wrapping materials may include, but not be limited to, air-permeable materials, air-impermeable materials, films (e.g., polymeric films, polyethylene films, plastic wrap), heat-shrinkable films, cardboard, wood, woven materials (i.e., fabric composed of two sets of yarns interlaced with each other to form the fabric), non-woven materials (i.e., assemblies of textile fibers held together by mechanical or chemical means in a random web or mat, e.g., fused thermoplastic fibers), foil materials (e.g., metallic materials), and the like, or any combination thereof. Suitable securing elements may include, but not be limited to, VELCRO®, pins, hooks, straps (e.g., woven, non-woven, fabric, and/or metallic), adhesives, tapes, melt bondings, and the like, or any combination thereof. In some embodiments, at least a portion of the packaging (including any component thereof) may be reusable.

In some embodiments, bales may have dimensions ranging from 30 inches (76 cm) to 60 inches (152 cm) in height, 46 inches (117 cm) to 56 inches (142 cm) in length, and 35 inches (89 cm) to 45 inches (114 cm) in width. In some embodiments, bales may range in weight from 900 pounds (408 kg) to 2100 pounds (953 kg). In some embodiments, bales may have a density greater than 300 kg/m$^3$ (18.8 lb/ft$^3$).

In some embodiments of the present invention, filaments may comprise additives. Some embodiments of the present invention may involve applying during any step outlined above or between any steps outlined above. Examples of suitable places to incorporate additives may include, but not be limited to, in the dope, in the finish, in the conditioning, or any combination thereof. Further, additives may be applied to the filaments at any point before forming the tow band, to the filaments during and/or after forming the tow band, to the filaments during and/or after crimping the tow band, to the filaments during and/or after conditioning, or any combination thereof.

Suitable additives may include, but not be limited to, active particles, active compounds, ion exchange resins, zeolites, nanoparticles, ceramic particles, softening agents, plasticizers, pigments, dyes, flavorants, aromas, controlled release vesicles, binders, adhesives, tackifiers, surface modification agents, lubricating agents, emulsifiers, vitamins, peroxides, biocides, antifungals, antimicrobials, antistatic agents, flame retardants, antifoaming agents, degradation agents, conductivity modifying agents, stabilizing agents, or any combination thereof. In some embodiments, achieving filaments that comprise an additive may be by including the additives in the dope; by applying the additives to the filaments before, after, and/or during formation of a tow band; by applying the additives to the filaments before, after, and/or during crimping the tow band; by applying the additives to the filaments before, after, and/or during conditioning the crimped tow band; and any combination thereof. It should be noted that applying includes, but is not limited to, dipping, immersing, submerging, soaking, rinsing, washing, painting, coating, showering, drizzling, spraying, placing, dusting, sprinkling, affixing, and any combination thereof. Further, it should be noted that applying includes, but is not limited to, surface treatments, infusion treatments where the additive incorporates at least partially into the filament, and any combination thereof.

One skilled in the art with the benefit of this disclosure should understand the concentration of the additive will depend at least on the composition of the additive, the size of the additive, the purpose of the additive, the point in the process in which the additive is included, and the size of the filament. By way of nonlimiting example, additives may be present in the dope in an amount ranging from 0.01% to 10% by weight of the polymer. By way of another nonlimiting example, additives that comprise particulates may be included such that the filament comprises 0.01% to 10% by volume of the filament.

Suitable active particles may include, but not be limited to, nano-scaled carbon particles, carbon nanotubes having at least one wall, carbon nanohorns, bamboo-like carbon nanostructures, fullerenes, fullerene aggregates, graphene, few layer graphene, oxidized graphene, iron oxide nanoparticles, nanoparticles, metal nanoparticles, gold nanoparticles, silver nanoparticles, metal oxide nanoparticles, an alumina nanoparticle, a magnetic nanoparticle, paramagnetic nanoparticle, a superparamagnetic nanoparticle, a gadolinium oxide nanoparticle, a hematite nanoparticle, a magnetite nanoparticle, a gado-nanotube, an endofullerene, Gd@C60, a core-shell nanoparticle, an onionated nanoparticle, a nanoshell, an onionated iron oxide nanoparticle, activated carbon, an ion exchange resin, a desiccant, a silicate, a molecular sieve, a silica gel, activated alumina, a zeolite, perlite, sepiolite, Fuller's Earth, magnesium silicate, a metal oxide, iron oxide, activated carbon, and any combination thereof.

Suitable active particles may have at least one dimension of less than one nanometer, such as graphene, to as large as a particle having a diameter of 5000 microns. Active particles may range from a lower size limit in at least one dimension of: 0.1 nanometers, 0.5 nanometers, 1 nanometer, 10 nanometers, 100 nanometers, 500 nanometers, 1 micron, 5 microns, 10 microns, 50 microns, 100 microns, 150 microns, 200 microns, and 250 microns. The active particles may range from an upper size limit in at least one dimension of: 5000 microns, 2000 microns, 1000 microns, 900 microns, 700 microns, 500 microns, 400 microns, 300 microns, 250 microns, 200 microns, 150 microns, 100 microns, 50 microns, 10 microns, and 500 nanometers. Any combination of lower limits and upper limits above may be suitable for use in the present invention, wherein the selected maximum size is greater than the selected minimum size. In some embodiments, the active particles may be a mixture of particle sizes ranging from the above lower and upper limits. In some embodiments, the size of the active particles may be polymodal.

Suitable active compounds may include, but not be limited to, malic acid, potassium carbonate, citric acid, tartaric acid, lactic acid, ascorbic acid, polyethyleneimine, cyclodextrin, sodium hydroxide, sulphamic acid, sodium sulphamate, polyvinyl acetate, carboxylated acrylate, and any combination thereof.

Suitable ion exchange resins may include, but not be limited to, polymers with a backbone, such as styrene-divinyl benzene (DVB) copolymer, acrylates, methacrylates, phenol formaldehyde condensates, and epichlorohydrin amine condensates; a plurality of electrically charged functional groups attached to the polymer backbone; and any combination thereof.

Zeolites may include crystalline aluminosilicates having pores, e.g., channels, or cavities of uniform, molecular-sized dimensions. Zeolites may include natural and synthetic materials. Suitable zeolites may include, but not be limited to, zeolite BETA (Na7(Al7Si57O128) tetragonal), zeolite ZSM-5 (Nan(AlnSi96-nO192) 16 H2O, with n<27), zeolite A, zeolite X, zeolite Y, zeolite K-G, zeolite ZK-5, zeolite ZK-4, mesoporous silicates, SBA-15, MCM-41, MCM48 modified by 3-aminopropylsilyl groups, alumino-phosphates, mesoporous aluminosilicates, other related porous materials (e.g., such as mixed oxide gels), or any combination thereof.

Suitable nanoparticles may include, but not be limited to, nano-scaled carbon particles like carbon nanotubes of any number of walls, carbon nanohorns, bamboo-like carbon nanostructures, fullerenes and fullerene aggregates, and graphene including few layer graphene and oxidized graphene; metal nanoparticles like gold and silver; metal oxide nanoparticles like alumina, silica, and titania; magnetic, paramagnetic, and superparamagnetic nanoparticles like gadolinium oxide, various crystal structures of iron oxide like hematite and magnetite, 12 nm $Fe_3O_4$, gado-nanotubes, and endofullerenes like Gd@C60; and core-shell and onionated nanoparticles like gold and silver nanoshells, onionated iron oxide, and others nanoparticles or microparticles with an outer shell of any of said materials; or any combination of the foregoing (including activated carbon). It should be noted that nanoparticles may include nanorods, nanospheres, nanorices, nanowires, nanostars (like nanotripods and nanotetrapods), hollow nanostructures, hybrid nanostructures that are two or more nanoparticles connected as one, and non-nano particles with nano-coatings or nano-thick walls. It should be further noted that nanoparticles may include the functionalized derivatives of nanoparticles including, but not limited to, nanoparticles that have been functionalized covalently and/or non-covalently, e.g., pistacking, physisorption, ionic association, van der Waals association, and the like. Suitable functional groups may include, but not be limited to, moieties comprising amines (1°, 2°, or 3°), amides, carboxylic acids, aldehydes, ketones, ethers, esters, peroxides, silyls, organosilanes, hydrocarbons, aromatic hydrocarbons, and any combination thereof; polymers; chelating agents like ethylenediamine tetraacetate, diethylenetriaminepentaacetic acid, triglycollamic acid, and a structure comprising a pyrrole ring; and any combination thereof. Functional groups may enhance removal of smoke components and/or enhance incorporation of nanoparticles into a porous mass.

Suitable softening agents and/or plasticizers may include, but not be limited to, water, glycerol triacetate (triacetin), triethyl citrate, dimethoxy-ethyl phthalate, dimethyl phthalate, diethyl phthalate, methyl phthalyl ethyl glycolate, o-phenyl phenyl-(bis) phenyl phosphate, 1,4-butanediol diacetate, diacetate, dipropionate ester of triethylene glycol, dibutyrate ester of triethylene glycol, dimethoxyethyl phthalate, triethyl citrate, triacetyl glycerin, and the like, any derivative thereof, and any combination thereof. One skilled in the art with the benefit of this disclosure should understand the concentration of plasticizers to use as an additive to the filaments. By way of non-limiting example, the plasticizer may be added to the dope in an amount sufficient to prevent rupture or bursting of the filament surface upon sudden thermal discharge of the adsorbed solvent.

As used herein, pigments refer to compounds and/or particles that impart color and are incorporated throughout the filaments. Suitable pigments may include, but not be limited to, titanium dioxide, silicon dioxide, tartrazine, E102, phthalocyanine blue, phthalocyanine green, quinacridones, perylene tetracarboxylic acid di-imides, dioxazines, perinones disazo pigments, anthraquinone pigments, carbon black, metal powders, iron oxide, ultramarine, calcium carbonate, kaolin clay, aluminum hydroxide, barium sulfate, zinc oxide, aluminum oxide, or any combination thereof.

As used herein, dyes refer to compounds and/or particles that impart color and are a surface treatment of the filaments. Suitable dyes may include, but not be limited to, CARTASOL® dyes (cationic dyes, available from Clariant Services) in liquid and/or granular form (e.g., CARTASOL® Brilliant Yellow K-6G liquid, CARTASOL® Yellow K-4GL liquid, CARTASOL® Yellow K-GL liquid, CARTASOL® Orange K-3GL liquid, CARTASOL® Scarlet K-2GL liquid, CARTASOL® Red K-3BN liquid, CARTASOL® Blue K-5R liquid, CARTASOL® Blue K-RL liquid, CARTASOL® Turquoise K-RL liquid/granules, CARTASOL® Brown K-BL liquid), FASTUSOL® dyes (an auxochrome, available from BASF) (e.g., Yellow 3GL, Fastusol C Blue 74L).

Suitable flavorants may be any flavorant suitable for use in smoking device filters including those that impart a taste and/or a flavor to the smoke stream. Suitable flavorants may include, but not be limited to, organic material (or naturally flavored particles), carriers for natural flavors, carriers for artificial flavors, and any combination thereof. Organic materials (or naturally flavored particles) include, but are not limited to, tobacco, cloves (e.g., ground cloves and clove flowers), cocoa, and the like. Natural and artificial flavors may include, but are not limited to, menthol, cloves, cherry, chocolate, orange, mint, mango, vanilla, cinnamon, tobacco, and the like. Such flavors may be provided by menthol, anethole (licorice), anisole, limonene (citrus), eugenol (clove), and the like, or any combination thereof. In some embodiments, more than one flavorant may be used including any combination of the flavorants provided herein. These flavorants may be placed in the tobacco column or in a section of a filter. Additionally, in some embodiments, the porous masses of the present invention may comprise a flavorant. The amount to include will depend on the desired level of flavor in the smoke taking into account all filter sections, the length of the smoking device, the type of smoking device, the diameter of the smoking device, as well as other factors known to those of skill in the art.

Suitable aromas may include, but not be limited to, methyl formate, methyl acetate, methyl butyrate, ethyl acetate, ethyl butyrate, isoamyl acetate, pentyl butyrate, pentyl pentanoate, octyl acetate, myrcene, geraniol, nerol, citral, citronellal, citronellol, linalool, nerolidol, limonene, camphor, terpineol, alpha-ionone, thujone, benzaldehyde, eugenol, cinnamaldehyde, ethyl maltol, vanilla, anisole, anethole, estragole, thymol, furaneol, methanol, or any combination thereof.

Suitable binders may include, but not be limited to, polyolefins, polyesters, polyamides (or nylons), polyacrylics, polystyrenes, polyvinyls, polytetrafluoroethylene (PTFE), polyether ether ketone (PEEK), any copolymer thereof, any derivative thereof, and any combination thereof. Non-fibrous plasticized cellulose derivatives may also be suitable for use as binder particles in the present invention. Examples of suitable polyolefins may include, but not be limited to, polyethylene, polypropylene, polybutylene, polymethylpentene, and the like, any copolymer thereof, any derivative thereof, and any combination thereof. Examples of suitable polyethylenes may include, but not be limited to, ultrahigh molecular weight polyethylene, very high molecular weight polyethylene, high molecular weight polyethylene, low-density polyethylene, linear low-density polyethylene, high-density polyethylene, and the like, any copolymer thereof, any derivative thereof, and any combination thereof. Examples of suitable polyesters may include, but not be limited to, polyethylene terephthalate, polybutylene terephthalate, polycyclohexylene dimethylene terephthalate, polytrimethylene terephthalate, and the like, any copolymer thereof, any derivative thereof, and any combination thereof. Examples of suitable polyacrylics may include, but not be limited to, polymethyl methacrylate, and the like, any copolymer thereof, any derivative thereof, and any combination thereof. Examples of suitable polystyrenes may include, but not be limited to, polystyrene, acrylonitrile-butadienestyrene, styrene-acrylonitrile, styrene-butadiene, styrene-maleic anhydride, and the like, any copolymer thereof, any derivative thereof, and any combination thereof. Examples of suitable polyvinyls may include, but not be limited to, ethylene vinyl acetate, ethylene vinyl alcohol, polyvinyl chloride, and the like, any copolymer thereof, any derivative thereof, and any combination thereof. Examples of suitable cellulosics may include, but not be limited to, cellulose acetate, cellulose acetate butyrate, plasticized cellulosics, cellulose propionate, ethyl cellulose, and the like, any copolymer thereof, any derivative thereof, and any combination thereof. In some embodiments, binder particles may comprise any copolymer, any derivative, or any combination of the above listed binders. Further, binder particles may be impregnated with and/or coated with any combination of additives disclosed herein.

Suitable tackifiers may include, but not be limited to, methylcellulose, ethylcellulose, hydroxyethylcellulose, carboxy methylcellulose, carboxy ethylcellulose, water soluble cellulose acetate, amides, diamines, polyesters, polycarbonates, silyl-modified polyamide compounds, polycarbamates, urethanes, natural resins, shellacs, acrylic acid polymers, 2-ethylhexylacrylate, acrylic acid ester polymers, acrylic acid derivative polymers, acrylic acid homopolymers, anacrylic acid ester homopolymers, poly(methyl acrylate), poly(butyl acrylate), poly(2-ethylhexyl acrylate), acrylic acid ester co-polymers, methacrylic acid derivative polymers, methacrylic acid homopolymers, methacrylic acid ester homopolymers, poly(methyl methacrylate), poly(butyl methacrylate), poly(2-ethylhexyl methacrylate), acrylamido-methyl-propane sulfonate polymers, acrylamido-methyl-propane sulfonate derivative polymers, acrylamido-methyl-propane sulfonate co-polymers, acrylic acid/acrylamido-methyl-propane sulfonate co-polymers, benzyl coco di-(hydroxyethyl) quaternary amines, p-T-amyl-phenols condensed with formaldehyde, dialkyl amino alkyl (meth)acrylates, acrylamides, N-(dialkyl amino alkyl) acrylamide, methacrylamides, hydroxy alkyl (meth)acrylates, methacrylic acids, acrylic acids, hydroxyethyl acrylates, and the like, any derivative thereof, or any combination thereof.

Suitable lubricating agents may include, but not be limited to, ethoxylated fatty acids (e.g., the reaction product of ethylene oxide with pelargonic acid to form poly(ethylene glycol) ("PEG") monopelargonate; the reaction product of ethylene oxide with coconut fatty acids to form PEG monolaurate), and the like, or any combination thereof. The lubricant agents may also be selected from non-water soluble materials such as synthetic hydrocarbon oils, alkyl esters (e.g., tridecyl stearate which is the reaction product of tridecyl alcohol and stearic acid), polyol esters (e.g., trimethylol propane tripelargonate and pentaerythritol tetrapelargonate), and the like, or any combination thereof.

Suitable emulsifiers may include, but not be limited to, sorbitan monolaurate, e.g., SPAN® 20 (available from Uniqema, Wilmington, Del.), poly(ethylene oxide) sorbitan monolaurate, e.g., TWEEN® 20 (available from Uniqema, Wilmington, Del.).

Suitable vitamins may include, but not be limited to, vitamin A, vitamin B 1, vitamin B2, vitamin C, vitamin D, vitamin E, or any combination thereof.

Suitable antimicrobials may include, but not be limited to, anti-microbial metal ions, chlorhexidine, chlorhexidine salt, triclosan, polymoxin, tetracycline, amino glycoside (e.g., gentamicin), rifampicin, bacitracin, erythromycin, neomycin, chloramphenicol, miconazole, quinolone, penicillin, nonoxynol 9, fusidic acid, cephalosporin, mupirocin, metronidazolea secropin, protegrin, bacteriolcin, defensin, nitrofurazone, mafenide, acyclovir, vanocmycin, clindamycin, lincomycin, sulfonamide, norfloxacin, pefloxacin, nalidizic acid, oxalic acid, enoxacin acid, ciprofloxacin, polyhexamethylene biguanide (PHMB), PHMB derivatives (e.g., biodegradable biguanides like polyethylene hexamethylene biguanide (PEHMB)), chlorhexidine gluconate, chlorohexidine hydrochloride, ethylenediaminetetraacetic acid (EDTA), EDTA derivatives (e.g., disodium EDTA or tetrasodium EDTA), and the like, and any combination thereof.

Antistatic agents may comprise any suitable anionic, cationic, amphoteric or nonionic antistatic agent. Anionic antistatic agents may generally include, but not be limited to, alkali sulfates, alkali phosphates, phosphate esters of alcohols, phosphate esters of ethoxylated alcohols, or any combination thereof. Examples may include, but not be limited to, alkali neutralized phosphate ester (e.g., TRYFAC® 5559 or TRYFRAC® 5576, available from Henkel Corporation, Mauldin, S.C.). Cationic antistatic agents may generally include, but not be limited to, quaternary ammonium salts and imidazolines which possess a positive charge. Examples of nonionics include the poly(oxyalkylene) derivatives, e.g., ethoxylated fatty acids like EMEREST® 2650 (an ethoxylated fatty acid, available from Henkel Corporation, Mauldin, S.C.), ethoxylated fatty alcohols like TRYCOL® 5964 (an ethoxylated lauryl alcohol, available from Henkel Corporation, Mauldin, S.C.), ethoxylated fatty amines like TRYMEEN® 6606 (an ethoxylated tallow amine, available from Henkel Corporation, Mauldin, S.C.), alkanolamides like EMID® 6545 (an oleic diethanolamine, available from Henkel Corporation, Mauldin, S.C.), or any combination thereof. Anionic and cationic materials tend to be more effective antistats.

## IV. Cellulose Acetate Tow Filter

The cellulose acetate tow described herein may be prepared as a filter rod to be used as a cellulose acetate tow filter. The method for forming the filter may include feeding a tow band (crimped or otherwise) having at least 15 total denier, e.g., at least 20 total denier or at least 25 total denier and, optionally, more than 20,500 total denier from a bale into an apparatus capable of producing filter rods. In some embodiments, producing a filter rod may include several steps including, but not limited to, at least one of the following: blooming the crimped tow band into a bloomed tow band; optionally treating the bloomed tow band with an additive; channeling the bloomed tow band yielding a continuous tow cable; wrapping a continuous tow cable with a paper yielding a wrapped tow rod; adhering the paper of a wrapped tow rod yielding a filter rod length; cutting the filter rod length into filter rods, filters, and/or filter sections; or any combination thereof. In some embodiments, producing filters and/or filter sections may involve cutting filter rod lengths or filter rods. In some embodiments, producing filter sections may involve cutting filter rod lengths, filter rods, or filters. The filter rod lengths, filter rods, and/or filter sections may have any cross-sectional shape including, but not limited to, circular, substantially circular, ovular, substantially ovular, polygonal (including those with rounded corners), or any hybrid thereof.

The length of a filter rod may range from 30 to 150 mm, e.g., from 35 to 140 mm, or from 40 to 100 mm. Multiple sections may be attached to each other.

The filter rod or filter may have a circumference from 5 to 26 mm and an encapsulated pressure drop of less than 3 mm water/mm length, e.g., less than 2.5 mm water/mm length, less than 2 mm water/mm length, less than 1.5 mm water/mm length, less than 1 mm water/mm length or less than 0.5 mm water/mm length. The filter rod or filter may have an EPD with a coefficient of variability or rod-to-rod variability (as measured below) of 20% or less, 15% or less, 10% or less, 7% or less, 6% or less, 5% or less, or 4% or less.

Further, the present invention provides production steps and/or parameters that yield high dpf and more than 20,500 total denier cellulose acetate tow bands that may integrate substantially seamlessly into current manufacturing processes, i.e., debaling with a low fault index. As used herein, the term "fault index" refers to the degree to which defects are produced in the tow band as it is debaled. The fault index is a weighted index with longer defects carrying higher weights. Generally the fault index is assessed over a set period of time, e.g., about 5-10 minutes, by observing the tow band leaving the bale prior to entering the downstream equipment used to produce smoking device filters. The test is typically conducted at very high speeds to magnify the potential for defects, e.g., 480 m/min tow debaling speed. Such speeds can be achieved with a KDF2/AF2 rod maker (available from Hauni) set at 400 mpm KDF tape speed. The AF2 opening system speeds are set to achieve a mid-point in the item capability range. One skilled in the art should understand the equivalent settings for other apparatuses to conduct such testing.

The rod-to-rod variability (a measure of the variability between individual filter rods taken at any point in time) can be determined by using statistically derived equations based on variability data generated from production bales. Filter rods are made using pre-defined processing conditions, filter-rod constants, sampling conditions, and sampling procedures defined by Multisourcing Coordinator. The apparatus is an AF-2 opening system with a Hauni KDF-2 rod maker and a standard threaded roll configuration of 25/75. The Hauni KDF2/AF2 is set as follows: (1) Rod length = 102 $\pm$ 0.1 mm; (2) Rod circumference = 24.45 $\pm$ 0.1 mm; (3) Pretension roll pressure = 1 bar (type A); (4) Threaded roll pressure = 2.5 bars; (5) Threaded roll ratio (optimum bloom) = 1.5:1; (6) SMI (Schweitzer Mauduit International) MR650B plug wrap (26.5 mm) or equivalent; (7) Large perforated funnel to run 400 m/min (5% tolerances) with 3/8-inch ID air supply tubing to air gauge & from air gauge to jet. Approximately 1 inch of tow bale is debaled before beginning. The yield result at 400 m/min with transport jet and large perforated funnel is determined with a target pressure drop $\pm$ 10 mm at 50% point-in-range.

The grand average of pressure drop, circumference, and weight and the pooled standard deviation, and the average %CV (coefficient of variation) are calculated according to the following formula (example shows step-by-step instruction using flowing formula).

$$\overline{\overline{X}} = \frac{\sum \overline{X_i}}{K}$$

$$S_p = \sqrt{\frac{\sum S_i^2}{K}}$$

$$\%CV = \frac{S_p}{\overline{\overline{X}}} \times 100$$

Where $Sp$ = pooled standard deviation of the 10 samples

$Si$ = standard deviation of the individual sample (QTM result)

$\overline{\overline{X}}$ = grand average of the 10 sample boxes

$K$ = number of sample boxes (10)

$\% CV$ = coefficient of variation

Examples

Four cellulose acetate tows of varied denier per filament and total denier were prepared as shown below in Table 1. The tows were prepared with a spinning speed of 300 meters per minute using a 9/16 inch crimper and a jet type 33 hole 165 micron jet.

| Table 1 | | | | |
|---|---|---|---|---|
| | **Ex. 1** | **Ex. 2** | **Ex. 3** | **Comp. Ex. A** |
| Dpf | 23.50 | 20.00 | 23.00 | 8 |
| Total denier | 31237.14 | 26584.80 | 27354.36 | 27000 |

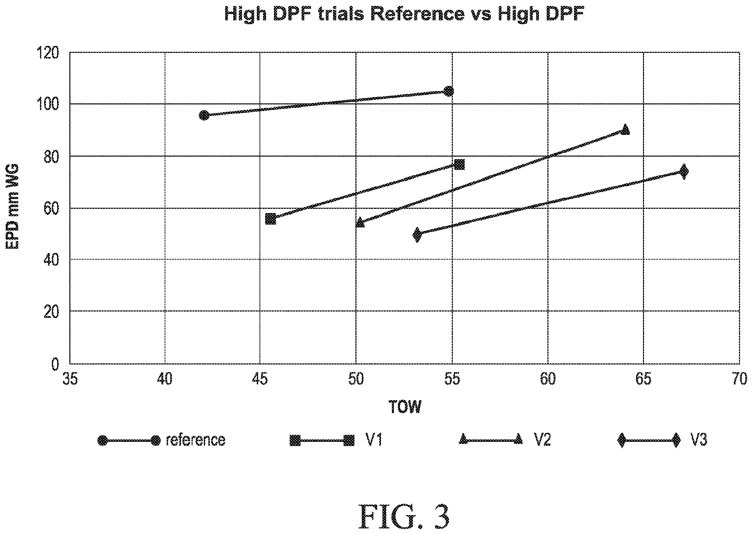

Each of Examples 1-3 and a Comparative Example were then tested for encapsulated pressure drop according to CORESTA ("Cooperation Centre for Scientific Research Relative to Tobacco") Recommended Method No. 41, dated June 2007. The results are shown in Table 2 and in FIG 3. As seen in Table 2 and FIG. 3, the EPD for Examples 1-3 was less than that of the Comparative Example. Also shown in Table 2 are the results calculated by dividing the EPD by the length of the filter (standard length of 102 mm).

| Table 2 | | | | | | | | |
|---|---|---|---|---|---|---|---|---|
| | **Ex. 1 (V3)** | | **Ex. 2 (V2)** | | **Ex. 3 (V1)** | | **Comp. Ex.** | |
| EPD mm water | 58 | 78 | 56 | 92 | 50 | 76 | 96 | 104 |
| TOW weight | 46 | 56 | 50 | 64 | 53 | 67 | 42 | 54 |
| Standard rod lengths | 102 | 102 | 102 | 102 | 102 | 102 | 102 | 102 |
| EPD mm water/ per mm length | 0.56 | 0.76 | 0.54 | 0.90 | 0.49 | 0.74 | 0.94 | 1.01 |

Each of Examples 1-3 were also tested for hardness against a reference sample, Comparative Example, which a reference hardness of 0.65. The hardness was tested by setting a Cerulean Quality Test Module (QTM - ASM 6, Rev #2) device and applying pressure until the rod bent. Hardness is generally conducted on fully cured filter rods. Standard conditions are 22°C and 60% RH. Circumferences of the QTM are for regular rods: 23.1-25.0 mm - 5/16" 157 mm with large range bobbin. The results are shown in FIG. 3. As shown in FIG. 3, the hardness of Examples 1-3 was satisfactory, as compared with the reference. Thus, the cellulose acetate tow having a denier per filament of at least 15 achieved improved EPD while still achieving satisfactory hardness.

While the invention has been described in detail, modifications within the spirit and scope of the invention will be readily apparent to those of skill in the art. It should be understood that aspects of the invention and portions of various embodiments and various features recited above and/or in the appended claims may be combined or interchanged either in whole or in part. In the foregoing descriptions of the various embodiments, those embodiments which refer to another embodiment may be appropriately combined with other embodiments as will be appreciated by one of ordinary skill in the art. Furthermore, those of ordinary skill in the art will appreciate that the foregoing description is by way of example only, and is not intended to limit the invention. All US patents and publications cited herein are incorporated by reference in their entirety.

Further embodiments are as follows:

1. A cellulose acetate tow having at least 15 denier per filament, preferably from 20 to 50 denier per filament, and more preferably from 25 to 40 denier per filament, and more than 20,500 total denier, preferably from 21,000 to 60,000 total, more preferably from 20,500 to 40,000 total denier.

2. The tow of item 1, wherein the tow has a breaking strength between 3.5 kg and 25 kg.

3. The tow of item 1 or 2, having an EPD mm water/ per mm length of 0.9 or less

4. A tow bale comprising the cellulose acetate tow of item 1.

5. A filter comprising the cellulose acetate tow of item 1.

6. The filter of item 5, wherein the filter has an encapsulated pressure drop of less than 3 mm water/mm length, preferably less than 1 mm water/mm length.

7. The filter of items 5 or 6, wherein the encapsulated pressure drop of the filter comprising the cellulose acetate tow has a coefficient of variability of less than 15%.

8. The filter of any of items 5-7, wherein the filter has a circumference from 5 to 30 mm.

9. A process for producing a cellulose acetate tow bale, comprising:

dissolving cellulose acetate in a solvent to form a cellulose acetate dope;
spinning the cellulose acetate dope through at least one spinneret with at least one hold diameter from 100 to 300 microns, preferably from 100 to 250 microns, to form filaments having a denier per filament of at least 15, preferably of at least 25, and a total denier of more than 20,500, preferably from 20,500 to 40,000 total denier;
bundling the filaments to form a tow;
plasticizing and crimping the tow;
drying the tow; and
packaging the tow into a bale.

10. The process of item 9, wherein the filaments undergo an evaporation step prior to bundling to form a tow.

11. The process of items 9 or 10, wherein the evaporation removes at least 90 wt.% of the solvent.

12. The process of any of items 9-11, wherein the evaporation is conducted at a temperature in the range of 90 to 100°C.

13. The process of any of items 9-12, wherein the evaporation is conducted at a pressure in the range of 120 to 180 psi.

14. The process of any of items 9-13, wherein the filaments exit the at least one spinneret at a drawdown ratio ranging from 0.7 to 1.6.

15. The process of any of items 9-14, wherein the residence time for the evaporation step is increased by more than 10% when compared with the residence time for a similar cellulose acetate tow bale made from filaments having a dpf from 2 to 8.

**Claims**

1. A cellulose acetate filter rod comprising:

   a) cellulose acetate tow having at least 15 denier per filament, preferably from 20 to 50 denier per filament, and more preferably from 25 to 40 denier per filament, and more than 20,500 total denier, preferably from 21,000 to 60,000 total, more preferably from 20,500 to 40,000 total denier; and
   b) an adhesive additive.

2. The cellulose acetate filter rod of claim 1, wherein the adhesive additive comprises a plasticizer.

3. The cellulose acetate filter rod of claims 1 or 2, wherein the adhesive additive has a concentration of 25 % or less.

4. The cellulose acetate filter rod of any of claims 1-3, wherein the cellulose acetate has a UCE from 190 to 400 gcm/cm.

5. The cellulose acetate filter rod of any of claims 1-4, wherein the cellulose acetate filter has a length from 30 to 150 mm.

6. The cellulose acetate filter rod of any of claims 1-5, wherein the filter has an encapsulated pressure drop of less than 3 mm water/mm length, preferably less than 1 mm water/mm length.

7. The cellulose acetate filter rod of any of claims 1-6, wherein the encapsulated pressure drop of the filter comprising the cellulose acetate tow has a coefficient of variability of less than 15%.

8. The cellulose acetate filter rod of any of claims 1-7, wherein the filter has a circumference from 5 to 30 mm.

9. A process for producing a cellulose acetate filter rod, comprising:

   dissolving cellulose acetate in a solvent to form a cellulose acetate dope;
   spinning the cellulose acetate dope through at least one spinneret with at least one hole diameter from 100 to 300 microns, preferably from 100 to 250 microns, to form filaments having a denier per filament of at least 15, preferably of at least 25, and a total denier of more than 20,500, preferably from 20,500 to 40,000 total denier;
   bundling the filaments to form a tow;
   plasticizing and crimping the tow;
   drying the tow; and
   packaging the tow into a bale;
   feeding the baled tow into an apparatus capable of producing filter rods;
   wherein the filter rods comprise 25 % or less of an adhesive additive.

10. The process of claim 9, wherein the filaments undergo an evaporation step prior to bundling to form a tow.

11. The process of claim 10, wherein the evaporation is conducted at a temperature in the range of 90 to 100°C.

12. The process of claim 10 or 11, wherein the evaporation is conducted at a pressure in the range of 8.27-12.40 bar, i.e. 120 to 180 psi.

13. The process of any of claims 9-12, wherein the filaments exit the at least one spinneret at a drawdown ratio ranging from 0.7 to 1.6.

14. The process of any of claims 9-13, wherein the adhesive additive comprises a plasticizer.

FIG. 1

FIG. 2

High DPF trials Reference vs High DPF

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62555995
- US 8967155 B
- US 2740775 A
- US 20130096297 A
- US 7610852 B
- US 7585441 B